# FASCICULE DE BREVET EUROPEEN

(11) **EP 1 748 444 B1**
(45) Date de publication et mention de la délivrance du brevet: **10.03.2010**
(21) Numéro de dépôt: 06014468.0
(22) Date de dépôt: 12.07.2006
(51) Int. Cl.: G11C 7/24, G11C 7/10

(54) **Procédé et dispositif de securisation d'un circuit integré, notamment une memoire**
Verfahren und Anordnung zur Sicherung einer integrierten Schaltung, insbesondere eines Speichers
Security method and system for an integrated circuit, particularly a memory

(30) Priorité: 26.07.2005 FR 0507912
(43) Date de publication de la demande: 31.01.2007
(73) Titulaire: STMicroelectronics SA, 92120 Montrouge (FR)
(72) Inventeur: Lisart, Mathieu, 13100 Aix En Provence (FR); Demange, Nicolas, 83470 Saint Maximin (FR)
(74) Mandataire: Marchand, André

(56) Documents cités:
- US-A1- 2003 048 900

## Description

La présente invention concerne la sécurisation des circuits intégrés, et notamment la protection des circuits intégrés pour carte à puce contre la fraude.

La présente invention concerne plus particulièrement la sécurisation de circuits de traitement de signaux parallèles et notamment la sécurisation de circuits de lecture de cellules mémoire, pour empêcher l'accès frauduleux à des données stockées dans une mémoire.

Les circuits de lecture de cellules mémoire, également appelés "amplificateurs de lecture", sont particulièrement vulnérables aux attaques de fraudeurs visant à découvrir des données présentes dans une mémoire. En effet, lorsque des amplificateurs de lecture lisent des cellules mémoire, la simple observation de leur activité (observation des potentiels électriques) permet de déterminer la valeur des données stockées dans des cellules mémoire en cours de lecture. Combinée à une injection d'erreur dans les adresses appliquées à la mémoire, cette technique permet de déduire la valeur des données stockées dans des zones protégées de la mémoire.

Les mémoires présentes dans les circuits intégrés pour cartes à puce sont particulièrement visées par ce type d'attaque car elles contiennent des données confidentielles (clés secrètes, mots de passe...) que le fraudeur cherche à connaître.

Pour contrer ce type d'attaque, il est connu de chiffrer les données contenues dans la mémoire. Toutefois, cette solution augmente la durée des cycles de traitement des données car elle nécessite de chiffrer les données avant de les écrire dans la mémoire puis de déchiffrer les données lues dans la mémoire avant de pouvoir les exploiter.

Le document US 2003/0048900 décrit des circuits pour crypter des données qui sortent de la mémoire.

Il est également connu d'implanter des cellules mémoire sur un substrat semi-conducteur sans suivre les règles habituelles de conception des circuits intégrés, afin que des cellules mémoire d'adresses successives ne soient pas physiquement voisines mais agencées de façon aléatoire.

Toutefois, lorsqu'un mot binaire est lu dans une mémoire, plusieurs cellules mémoire sont lues simultanément, chaque cellule mémoire contenant un bit du mot binaire. Chaque cellule mémoire de rang déterminé fournit un signal électrique dont le traitement est assuré par un amplificateur de lecture de rang déterminé. Il existe ainsi une relation statique entre le rang d'une cellule mémoire au sein d'un groupe de cellules contenant un mot binaire et le rang de l'amplificateur de lecture affecté à la lecture de la cellule mémoire, grâce à laquelle les bits fournis par les amplificateurs de lecture sont agencés dans un ordre déterminé, correspondant à leur rang au sein du mot binaire. Ainsi, le fraudeur peut observer l'activité des amplificateurs de lecture, en déduire la valeur des données en train d'être lues puis retrouver l'adresse des cellules mémoire qui contiennent ces données. Par conséquent, un agencement aléatoire de cellules mémoire et une attribution d'adresse aléatoire aux cellules mémoire ne permet pas de contrer valablement les tentatives de fraude et permet seulement de complexifier le travail du fraudeur.

Ainsi, un objectif général de la présente invention est de contrer les techniques de fraude de circuits intégrés basées sur l'observation de l'activité de circuits de traitement de signaux électriques parallèles.

Un objectif plus particulier de la présente invention est de contrer les techniques de fraude d'une mémoire basées sur l'observation de l'activité des amplificateurs de lecture présents dans la mémoire.

De façon générale, la présente invention se base sur la constatation que des circuits de traitement parallèles tels des amplificateurs de lecture sont vulnérables aux attaques de fraudeurs, dès lors qu'il existe une relation ou "règle d'assignation" statique entre les signaux électriques à traiter, par exemple les signaux électriques fournis par les cellules mémoire, et les circuits de traitement.

Une telle règle d'assignation statique existe dans divers types de dispositifs autres que les mémoires, où un niveau de sécurité élevé peut également être souhaité, par exemple un convertisseur analogique/numérique comprenant plusieurs blocs de conversion analogique/numérique recevant chacun un signal analogique et fournissant chacun un signal numérique correspondant au signal analogique reçu, ou un circuit de surveillance comprenant des blocs de surveillance parallèles recevant chacun un signal à surveiller et basculant dans un état d'erreur lorsque le signal surveillé présente une caractéristique déterminée, par exemple un niveau de tension ou de courant dépassant un seuil déterminé, etc..

Ainsi, la présente invention prévoit un procédé de lecture de cellules mémoire dans une mémoire, dans lequel un cycle de lecture comprend des étapes de sélection de cellules mémoire dans la mémoire, et d'application de signaux électriques fonction de l'état des cellules mémoire sélectionnées à des circuits de lecture de cellules mémoire, agencés pour lire en parallèle les cellules mémoire sélectionnées, et fournir chacun un signal de sortie binaire représentatif de l'état de la cellule mémoire à laquelle il est relié, chaque signal électrique ayant un rang déterminé, caractérisé en ce qu'un

cycle de lecture comprend une étape de modification d'une règle d'assignation des signaux électriques aux circuits de lecture, de sorte qu'un circuit de lecture traite des signaux électriques de rangs différents au cours de cycles de lecture différents.

Selon un mode de réalisation de l'invention, la règle d'assignation est modifiée de façon aléatoire ou pseudo-aléatoire tous les T cycles de lecture afin de ne pas être prédictible, T étant un entier constant ou variable, supérieur ou égal à 1.

Selon un mode de réalisation de l'invention, le nombre de circuits de lecture est égal au nombre de signaux électriques à traiter, chaque circuit de lecture étant affecté à un signal électrique et un seul à chaque cycle de lecture, sans redondance de circuits de lecture.

Selon un mode de réalisation de l'invention, l'étape de modification de la règle d'assignation comprend une étape d'application d'une première permutation à au moins une partie des signaux électriques à traiter.

Selon un mode de réalisation de l'invention :
- les circuits de lecture fournissent des signaux de sortie ayant chacun un rang déterminé, et
- l'étape de modification de la règle d'assignation comprend une étape d'application aux signaux de sortie d'une seconde permutation pour ordonner les signaux de sortie dans un ordre invariant prédéterminé.

Selon un mode de réalisation de l'invention, une permutation est effectuée au moyen de multiplexeurs.

Selon un mode de réalisation de l'invention, le procédé comprend des étapes consistant à :
- définir des groupes de signaux électriques et des groupes de circuits de lecture, chaque groupe de circuits de lecture étant affecté à un groupe de signaux,
- définir au sein de chaque groupe de signaux électriques une règle d'assignation de chaque signal électrique du groupe à l'un des circuits de lecture du groupe de circuits de lecture affecté au groupe de signaux, et
- modifier la règle d'assignation des signaux électriques au sein d'au moins un groupe de signaux entre deux cycles de lecture différents.

Selon un mode de réalisation de l'invention, le nombre de circuits de lecture dans chaque groupe de circuits de lecture est égal au nombre de signaux électriques dans chaque groupe de signaux électriques, chaque groupe de circuits de lecture étant affecté à un groupe de signaux électriques sans redondance de circuits de lecture.

Selon un mode de réalisation de l'invention, le procédé comprend des étapes consistant à :
- prévoir des chemins électriques permutables entre les cellules mémoire et les circuits de lecture,
- appliquer une première permutation à au moins une partie des chemins électriques, pour modifier l'ordre dans lequel les cellules mémoire sélectionnées sont reliées aux circuits de lecture, et
- appliquer une seconde permutation aux signaux de sortie fournis par les circuits de lecture, pour que les signaux de sortie soient fournis dans un ordre invariant prédéterminé.

L'invention concerne également une mémoire comprenant :
- des cellules mémoire,
- des moyens de sélection de cellules mémoire,
- des circuits de lecture de cellules mémoire, agencés pour recevoir en parallèle des signaux électriques fonction de l'état des cellules mémoire sélectionnées et fournir chacun un signal de sortie binaire représentatif de l'état de la cellule mémoire à laquelle il est relié, caractérisé en ce qu'elle

comprend :
- un premier circuit de permutation pour appliquer une permutation à au moins une partie des signaux électriques à l'entrée des circuits de lecture et modifier la règle d'assignation des signaux électriques aux circuits de lecture, et
- des moyens de contrôle du premier circuit de permutation, pour modifier la règle d'assignation entre des cycles de lecture successifs.

Selon un mode de réalisation de l'invention, la mémoire comprend un nombre de circuits de lecture égal au nombre de signaux électriques à traiter, chaque circuit de lecture étant affecté à un signal électrique et un seul à chaque cycle de lecture, sans redondance de circuits de lecture.

Selon un mode de réalisation de l'invention, les moyens de contrôle fournissent au circuit de permutation un signal de consigne de permutation.

Selon un mode de réalisation de l'invention, les moyens de contrôle modifient le signal de consigne de façon aléatoire ou pseudo-aléatoire tous les T cycles de lecture, T étant un entier constant ou variable, supérieur ou égal à 1.

Selon un mode de réalisation de l'invention, les circuits de lecture fournissent des signaux de sortie de rang déterminé, et comprenant un second circuit de permutation pour appliquer aux signaux de sortie une permutation telle que les signaux de sortie soient fournis dans un ordre invariant prédéterminé.

Selon un mode de réalisation de l'invention, le premier et/ou second circuit de permutation comprend des multiplexeurs.

Selon un mode de réalisation de l'invention :
- le premier circuit de permutation comprend des blocs de permutation juxtaposés, chaque bloc de permutation étant agencé pour assigner les signaux électriques d'un groupe de signaux électriques à un groupe de circuits de lecture affecté au groupe de signaux électriques, et
- les moyens de contrôle sont agencés pour modifier la règle d'assignation appliquée par au moins un bloc entre deux cycles de lecture différents.

Selon un mode de réalisation de l'invention, le nombre de circuits de lecture dans chaque groupe de circuits de lecture est égal au nombre de signaux électriques dans chaque groupe de signaux électriques, les groupes de circuits de lecture étant affectés chacun à un groupe de signaux électriques sans redondance de circuits de lecture.

Selon un mode de réalisation de l'invention, la mémoire comprend :
- des chemins électriques reliant les cellules mémoire sélectionnées aux circuits de lecture,
- un premier circuit de permutation pour permuter les chemins reliant les cellules mémoire et les circuits de lecture, et
- un second circuit de permutation pour appliquer une permutation aux signaux de sortie fournis par les circuits de lecture, pour que les signaux de sortie soient fournis dans un ordre invariant prédéterminé.

Ces objets, caractéristiques et avantages ainsi que d'autres de la présente invention seront exposés plus en détail dans la description suivante de l'invention faite à titre non limitatif en relation avec les figures jointes parmi lesquelles :
- la figure 1 représente sous forme de blocs un dispositif classique de traitement de signaux électriques parallèles ;
- la figure 2 représente sous forme de blocs un dispositif selon l'invention de traitement de signaux électriques, comprenant des circuits de permutation ;
- la figure 3 représente schématiquement un mode de réalisation des circuits de permutation de la figure 2, comprenant une juxtaposition de blocs de permutation ;
- les figures 4A et 4B représentent un exemple de réalisation des blocs de permutation de la figure 3 ;
- la figure 5 représente un mode de réalisation des circuits de permutation de la figure 2 sans juxtaposition de blocs de permutation; et
- la figure 6 représente schématiquement une mémoire équipée d'un dispositif de traitement selon l'invention.

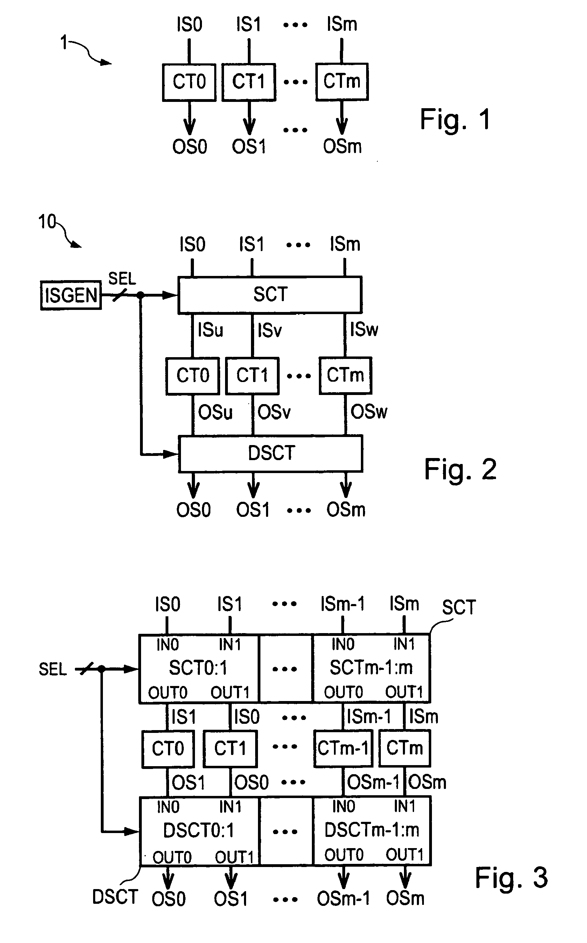

La figure 1 représente un dispositif classique 1 assurant le traitement de signaux électriques IS0-ISm parallèles. Le dispositif comprend des circuits de traitement CT0, CT1,...CTm parallèles, chacun ayant un rang déterminé et comportant une entrée pour recevoir l'un des signaux électriques IS0-ISm, ceux-ci ayant également chacun un rang déterminé. Les circuits de traitement réalisent la même fonction de traitement et les signaux électriques IS0-ISm sont traités en parallèle au cours de cycles de traitement successifs entre lesquels ils changent de valeur ou sont présumés changer de valeur. A l'issue de chaque cycle de traitement, chaque circuit de traitement fournit un signal de sortie OS0-OSm ayant un rang correspondant à celui du signal d'entrée qu'il reçoit.

Dans un tel dispositif, le signal électrique reçu par chaque circuit de traitement est déterminé par une règle d'assignation statique définissant les chemins électriques amenant les signaux électriques IS0-ISm aux circuits de traitement CT0-CTm. Le schéma représenté en figure 1 ne comporte pas d'entrelacement, un circuit CTi de rang "i" déterminé (0, 1,...m) assurant le traitement d'un signal ISi de même rang. La règle d'assignation pourrait également comporter un entrelacement statique des chemins électriques mais, pour des raisons exposées plus haut, cette précaution serait insuffisante pour contrer valablement les techniques de fraude basées sur l'observation de l'activité des circuits de traitement.

La figure 2 représente un dispositif de traitement 10 selon l'invention. Le dispositif 10 assure le traitement des mêmes signaux électriques IS0-ISm que le dispositif 1 représenté en figure 1 et comprend les mêmes circuits de traitement CT0, CT1,...CTm. Le dispositif 10 se distingue tout d'abord du dispositif 1 en ce qu'il comporte des moyens permettant de modifier de façon dynamique la règle d'assignation des signaux IS0, IS1,...ISm aux circuits de traitement CT0, CT1,...CTm.

Ces moyens comprennent ici un premier circuit de permutation SCT et un circuit ISGEN fournissant un signal de commande SEL au circuit de permutation SCT. Le circuit SCT détermine les chemins électriques amenant les signaux IS0-ISm aux circuits de traitement CT0, CT1,...CTm selon une règle d'assignation qui est fonction du signal de commande SEL, lequel est modifié tous les T cycles de traitement par le circuit ISGEN, T étant un nombre entier supérieur ou égal à 1. Ainsi, tous les T cycles de traitement, les chemins électriques amenant les signaux IS0-ISm aux circuits de traitement CT0-CTm sont modifiés en tout ou en partie, de sorte qu'un circuit de traitement CTi de rang i peut traiter un signal électrique de rang i' différent de i au cours d'un cycle de traitement, puis traiter un signal électrique de rang i" différent de i' au cours d'un autre cycle de traitement.

Sur la figure 2, il apparaît ainsi que le circuit de permutation SCT reçoit les signaux électriques IS0, IS1,...ISm de rangs 0,1,...m et fournit aux circuits de traitement CT0, CT1,...CTm des signaux électriques ISu, ISv,...ISw de rangs respectifs u, v,...w ne correspondant pas nécessairement à 0, 1,...m (u, v,...w étant des entiers compris entre 0 et m). Par contre, les circuits de traitement fournissent des signaux de sortie OSu, OSv,...OSw de même rang que les signaux électriques reçus ISu, ISv,...ISw.

De préférence, le signal de commande SEL est rafraîchi de façon aléatoire ou pseudo-aléatoire tous les T cycles de traitement afin que les modifications de la règle d'assignation ne soient pas prédictibles.

Par ailleurs, il peut être avantageux de modifier régulièrement ou aléatoirement la fréquence de modification de la règle d'assignation. Dans ce cas, le paramètre T est une variable qui peut elle-même être aléatoire ou pseudo aléatoire.

Selon un second aspect de l'invention, le dispositif de traitement 10 comprend un second circuit de permutation DSCT, agencé à la sortie des circuits de traitement CT0-CTm. Le circuit DSCT applique aux signaux de sortie OSu, OSv,...OSw fournis par les circuits de traitement une permutation qui est telle que ces signaux sont réordonnés dans un ordre invariant prédéterminé.

L'ordre souhaité pour la présentation des signaux de sortie peut être le même que l'ordre dans lequel les signaux électriques IS0, IS1,...ISm sont reçus par le circuit de permutation SCT, comme illustré sur la figure 2. Dans ce cas, le circuit de permutation DSCT applique aux signaux de sortie OSu, OSv,...Osw une permutation qui est l'inverse de celle appliquée par le circuit de permutation SCT, de sorte que l'on retrouve à la sortie du circuit DSCT les signaux de sortie OS0, OS1,...OSm dans le même ordre que les signaux d'entrée IS0, IS1,...ISm, OS0 étant le signal de sortie correspondant au signal d'entrée IS0, OS1 le signal de sortie correspondant au signal d'entrée IS1, etc., OSm étant le signal de sortie correspondant au signal d'entrée ISm.

L'ordre souhaité pour la présentation des signaux de sortie, bien qu'étant invariable, peut aussi être différent de l'ordre dans lequel les signaux électriques IS0, IS1,...ISm sont reçus. Dans ce cas le circuit de permutation DSCT applique aux signaux de sortie OSu, OSv,...Osw une première permutation qui est l'inverse de celle appliquée par le circuit de permutation SCT puis une seconde permutation (invariable) pour obtenir l'ordre souhaité.

Dans les deux cas, la permutation que réalise le circuit DSCT compense (neutralise) celle effectuée par le circuit SCT. A cet effet, le second circuit de permutation DSCT peut être commandé par le même signal de commande SEL que le circuit de permutation SCT.

L'homme de l'art notera que le second aspect de l'invention n'est pas nécessaire lorsque les circuits de traitement CT0-CTm fournissent des signaux de sortie dont le rang est sans importance ou lorsque les signaux à traiter incluent par exemple une étiquette d'identification qui est recopiée par les circuits de traitement dans les signaux de sortie (par exemple dans le cas d'un traitement parallèle de signaux numériques comprenant un champ d'identification).

Grâce à l'invention, une simple observation de l'activité des circuits de traitement CT0-CTm ne permet pas de déterminer la relation existant entre les signaux de sortie et les signaux d'entrée, car cette relation change tous les T cycles de traitement selon une règle qui n'est pas connue du fraudeur et est de préférence aléatoire ou pseudo-aléatoire comme proposé ci-dessus.

La figure 3 illustre un mode de réalisation du dispositif selon l'invention dans lequel les circuits de permutation SCT, DSCT sont formés par la juxtaposition de blocs de permutation SCT0:1 à SCTm-1:m, respectivement DSCT0:1 à DSCTm-1:m, ayant chacun un nombre d'entrées et de sorties inférieur au nombre total des signaux électriques IS0-ISm.

A cet effet les signaux d'entrée IS0-ISm, les signaux de sortie OS0-Osm et les circuits de traitement sont répartis dans plusieurs groupes de signaux d'entrée, autant de groupes de signaux de sortie, et autant de groupes de circuits de traitement. Chaque bloc SCT0:1 - SCTm-1:m comprend des entrées pour recevoir un groupe de signaux électriques d'entrée, des sorties connectées aux entrées d'un groupe de circuits de traitement CT0-CTm, et applique entre ses entrées et ses sorties une permutation fonction du signal de commande SEL. De même, chaque bloc de permutation DSCT0:1 - DSCTm-1:m comprend des entrées connectées aux sorties d'un groupe de circuits de traitement CT0-CTm, pour recevoir un groupe de signaux de sortie fourni par le groupe de circuits de traitement, et des sorties pour recopier ces signaux de sortie après leur avoir appliqué une permutation qui est fonction du signal de commande SEL.

A chaque bloc de permutation SCT0:1 - SCTm-1:m correspond un bloc de permutation DSCT0:1 - DSCTm-1:m et réciproquement. Un bloc de permutation SCT0:1 - SCTm-1:m et le bloc de permutation DCT0:1 - DSCTm-1:m correspondant appliquent des permutations inverses l'une de l'autre aux signaux d'entrée et de sortie des circuits de traitement correspondants, afin que chacun des signaux de sortie soit présenté selon un rang invariable indépendant des variations de la règle d'attribution (ici un rang identique au rang du signal d'entrée correspondant).

Dans un mode de réalisation préféré tel que représenté sur la figure 3, les blocs SCT0:1-SCTm-1:m et DSCT0:1-DSCTm-1:m sont tous identiques et présentent le même nombre d'entrées et de sorties, ici deux entrées et deux sorties.

Ainsi, chaque bloc de permutation SCT0:1-SCTm-1:m, DSCT0:1-DSCTm-1:m comprend deux entrées IN0, IN1, deux sorties OUT0, OUT1 et est commandé par un bit du signal de commande SEL qui est ici un mot binaire. Le bit de commande qui pilote un bloc de permutation SCT0:1-SCTm-1:m est également appliqué au bloc de permutation DSCT0:1-DSCTm-1:m correspondant.

Chaque bloc de permutation SCT0:1-SCTm-1:m reçoit sur ses entrées IN0, IN1 deux signaux à traiter parmi les signaux IN0-INm et applique ou non une permutation à ces signaux en fonction de la valeur du bit de commande, et fournit sur ses sorties OUT0, OUT1 les deux signaux dans l'ordre initial ou dans un ordre inversé.

De même, chaque bloc de permutation DSCT0:1-DSCTm-1:m reçoit sur ses entrées IN0, IN1 deux signaux de sortie parmi les signaux OS0-OSm fournis par les circuits de traitement CT0-CTm et applique ou non une permutation à ces signaux en fonction de la valeur du bit de commande, pour fournir sur ses sorties OUT0, OUT1 les deux signaux dans l'ordre initial ou dans un ordre inversé.

Par exemple, le bloc SCT0:1 fournit les signaux IS0, IS1 aux circuits de traitement CT0, CT1 dans un ordre qui est fonction du premier bit du signal SEL, et le bloc correspondant DSCT0:1, piloté par le même bit de commande, recopie les signaux de sortie OS0, OS1 fournis par les circuits de traitement CT0, CT1 de manière que ceux-ci se présentent dans l'ordre initial des signaux IS0, IS1. Ainsi, en supposant que le bloc SCT0:1 permute les signaux d'entrée IS0, IS1, comme représenté sur la figure, le bloc DSCT0:1 permute également les signaux de sortie OS0, OS1 qui se trouvent alors réordonnés conformément aux rangs des signaux d'entrée.

De même, chaque bloc de permutation suivant SCTi:i+1, et ce jusqu'au dernier bloc SCTm-1:m, fournit les signaux ISi, ISi+1 à des circuits de traitement CTi, CTi+1 dans un ordre qui est fonction du bit de commande du signal SEL affecté au contrôle de ce bloc, et le bloc correspondant DSCTi:i+1, piloté par le même bit de commande, recopie les signaux de sortie OSi, OSi+1 fournis par les circuits de traitement CTi, CTi+1 de manière que ceux-ci se présentent dans l'ordre initial des signaux ISi, ISi+1.

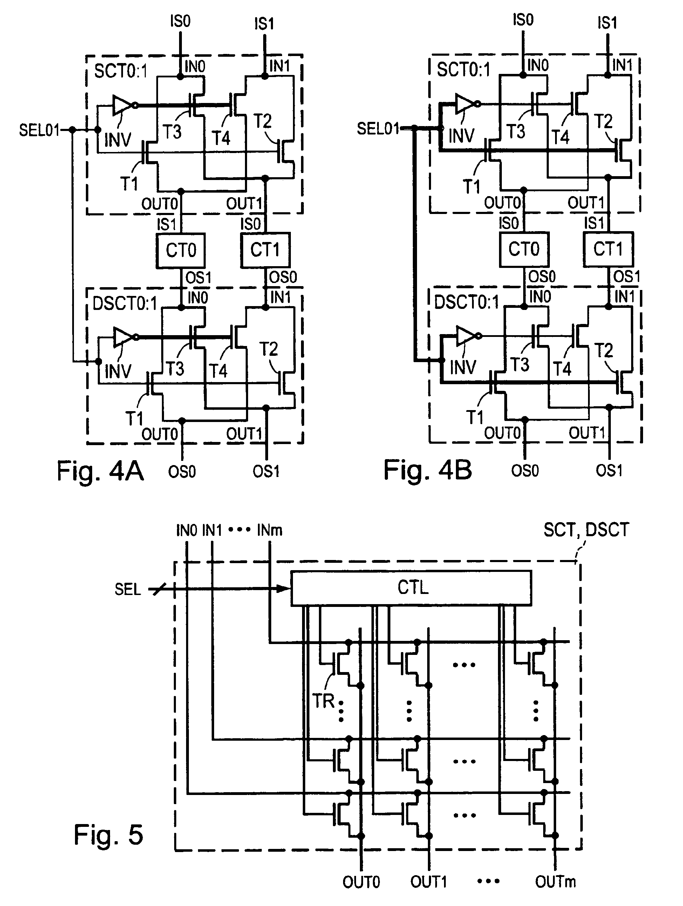

Les figures 4A et 4B illustrent un mode de réalisation de deux blocs de permutation, par exemple les blocs SCT0:1, DSCT0:1, les autres blocs étant identiques.

Chaque bloc de permutation SCT0:1 ou DSCT0:1 comprend quatre transistors NMOS T1-T4. La grille des transistors T1 et T2 est commandée par un bit SEL01 du signal de commande SEL et la grille des transistors T3, T4 est commandée par le bit SEL01 inversé fourni par une porte inverseuse INV. L'entrée IN0 du bloc de permutation est connectée aux drains des transistors T1 et T3, et l'entrée IN1 est connectée aux drains des transistors T2 et T4. Les sources des transistors T1 et T4 sont connectées à la sortie OUT0 du bloc de permutation, et les sources des transistors T2 et T3 sont connectées à la sortie OUT1.

La figure 4A illustre le cas où le bit de commande SEL01 est à 0, soit la masse du circuit ou un niveau bas de tension, et la figure 4B illustre le cas où le bit de commande SEL01 est à 1, soit un niveau haut de tension suffisant pour rendre les transistors passants. Les équipotentielles au niveau bas sont représentées en traits fins et les équipotentielles au niveau haut sont représentées en traits plus épais.

Sur la figure 4A, les transistors T3 et T4 sont passants tandis que les transistors T1 et T2 sont bloqués. Il en résulte que les rangs des signaux IS0 et IS1 sont inversés en sortie du bloc SCT0:1. Ainsi, le signal IS1 est appliqué en entrée du circuit de traitement CT0 et le signal IS0 est appliqué en entrée du circuit de traitement CT1. En sortie des circuits CT0, CT1, les signaux de sortie OS0 et OS1 sont dans le même ordre que les signaux IS0, IS1 tels qu'appliqués aux circuits de traitement, de sorte que le signal OS1 est appliqué à l'entrée IN0 du bloc DSCT0:1 tandis que le signal OS0 est appliqué à l'entrée IN1 du bloc DSCT0:1.

Comme le même bit de commande SEL01 est appliqué aux blocs SCT0:1 et DSCT0:1, les transistors T3 et T4 du bloc DSCT0:1 sont également passants, tandis que les autres transistors sont bloqués. Il en résulte que le signal OS1 appliqué à l'entrée IN0 est recopié par la sortie OUT1 du bloc DSCT0:1, tandis que le signal OS0 appliqué à l'entrée IN1 est recopié par la sortie OUT0 du bloc DSCT0:1. Les signaux OS0 et OS1 sont donc fournis suivant le rang des signaux d'entrée IS0 et IS1 correspondants.

L'homme de l'art notera que les transistors T1, T3 forment un premier circuit multiplexeur et que les transistors T2, T4 forment un second circuit multiplexeur. Ainsi, chaque bloc SCT0:1, DSCT0:1 est l'équivalent de deux multiplexeurs imbriqués ayant leurs sorties interconnectées.

La figure 5 représente un second mode de réalisation des circuits de permutation SCT, DSCT de la figure 2 sans juxtaposition de blocs de permutation. Chaque circuit de permutation SCT, DSCT comprend ici m × m transistors TR, par exemple des transistors NMOS, disposés en lignes et en colonnes selon une répartition matricielle de m lignes et m colonnes, m étant le nombre de circuits de traitement CT0-CTm.

Les drains des transistors de chaque ligne sont connectés respectivement à une entrée IN0-INm du circuit de permutation, tandis que les sources des transistors de chaque colonne sont respectivement connectées à une sortie OUT0-OUTm du circuit. Les grilles des transistors sont commandées séparément par un circuit de contrôle CTL. Pour réaliser des permutations, le circuit de contrôle CTL commande les transistors T de sorte qu'un seul transistor soit passant par ligne et par colonne de transistors. Le nombre de permutations dans un ensemble ordonné de m+1 éléments étant égal à (m+1)! (factorielle m+1), le signal de commande SEL fourni par le circuit de commande ISGEN comporte le nombre de bits nécessaires pour coder (m+1)!. Par exemple, pour 8 circuits de traitement (m = 7), le nombre de permutations possibles est égal à 8! (40320) et le signal de commande comporte alors 16 bits.

Il est à noter que les circuits de contrôle CTL des deux circuits de permutation SCT, DSCT peuvent être prévus différents de manière à effectuer des permutations inverses à partir du même signal de commande SEL. Les circuits de contrôle CTL peuvent également être prévus identiques et recevoir des signaux de commande SEL(SCT) et SEL(DSCT) différents mais liés, le circuit ISGEN assurant alors la fourniture du signal aléatoire ou pseudo aléatoire SEL(SCT) et la fourniture du signal SEL(DSCT) tel que le circuit DSCT effectue une permutation qui neutralise celle effectuée par le circuit SCT, avec éventuellement réorganisation des signaux de sortie selon un ordre invariable différent de celui des signaux d'entrée.

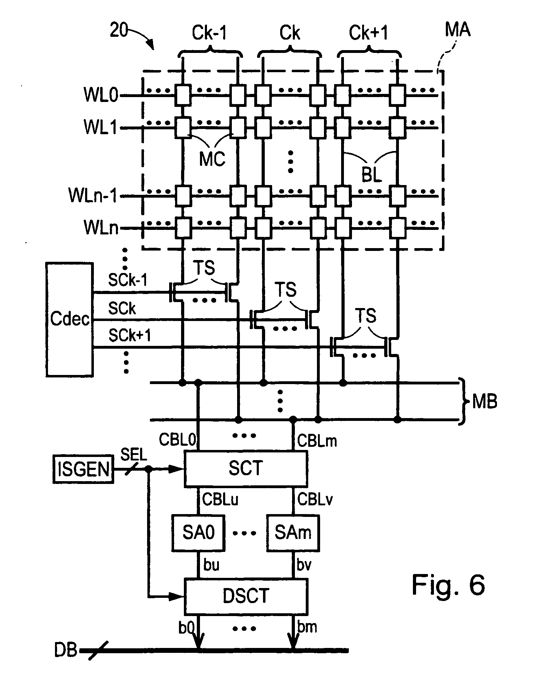

La figure 6 illustre une application de la présente invention à une mémoire 20 dans laquelle on a incorporé les circuits de permutation SCT, DSCT et le circuit de commande ISGEN décrits ci-dessus.

La mémoire 20 est par exemple de type EEPROM ou FLASH et comporte un plan mémoire MA comprenant des cellules mémoire MC effaçables et programmables électriquement. Les cellules mémoire MC sont connectées à des lignes de mot horizontales WL0-WLn et à des lignes de bit verticales BL. Les lignes de bit sont regroupées en colonnes Ck-1, Ck, Ck+1 comportant chacune m+1 lignes de bit BL, m+1 étant le nombre de bits par colonne, et k étant un indice de colonne. Le plan mémoire définit ainsi, le long des lignes de mot WL0-WLn, des mots binaires de m+1 bits chacun.

La mémoire 20 comprend également m+1 amplificateurs de lecture SA0-SAm permettant de lire un mot binaire de m+1 bits en un cycle de lecture. Chaque ligne de bit BL est reliée à un amplificateur de lecture par l'intermédiaire d'un transistor de sélection TS et d'un bus de multiplexage MB. Un décodeur de colonne CDEC fournit des signaux de sélection de colonne SCk-1, SCk, SCk+1 qui sont appliqués aux grilles des transistors TS. Les transistors TS assurant la sélection des lignes de bit d'une même colonne sont pilotés par le même signal SCk. Ainsi, sur sélection d'une ligne de mot WLi (i étant un nombre entier compris entre 0 et n, n étant le nombre de lignes de mots dans le plan mémoire) et d'une colonne Ck, les amplificateurs de lecture SA0-SAm lisent les m+1 cellules mémoire MC du mot de rang i,k sélectionné. A cet effet, ils reçoivent via le bus MB des signaux CBL0-CBLm représentatifs de l'état de conductivité des cellules mémoire sélectionnées auxquelles ils sont reliés, et fournissent sur un bus de données DB des bits de donnée b0-bm. Comme cela est bien connu de l'homme de l'art, dans une mémoire de type EEPROM ou FLASH les signaux CBL0-CBLm sont généralement des courants dont l'intensité dépend de l'état de conductivité des cellules mémoire, l'état de conductivité des cellules mémoire étant lui-même représentatif des données enregistrées dans celles-ci.

Le circuit de permutation SCT selon l'invention est agencé entre le bus de multiplexage MB et les entrées des amplificateurs de lecture SA0-SAm et est piloté comme précédemment par le signal de commande SEL fourni par le circuit ISGEN. Le circuit ISGEN fournit un nouveau signal de commande SEL tous les T cycles de lecture d'un mot dans la mémoire, par exemple à chaque nouveau cycle de lecture (T=1). Comme précédemment, le signal SEL est de préférence aléatoire ou pseudo-aléatoire afin de ne pas être prédictible. Le nombre T de cycles de lecture pendant lesquels le signal de commande est maintenu invariant peut également être variable au cours du temps, comme exposé plus haut.

Ainsi, les rangs 0-m des signaux CBL0-CBLm ne correspondent pas nécessairement aux rangs des amplificateurs SA0-SAm. Ainsi, dans l'exemple représenté sur la figure 6, le signal CBLu de rang u est appliqué à l'amplificateur SA0, et le signal CBLv de rang v à l'amplificateur SAm, u et v étant des nombres entiers compris entre 0 et m qui ne sont pas nécessairement égaux à 0 et m, respectivement.

Le second circuit de permutation DSCT est agencé à la sortie des amplificateurs SA0-SAm pour réordonner les bits b0-bm selon un ordre invariant correspondant au rang des cellules mémoire ou selon un ordre invariant sans relation avec le rang des cellules mémoire (par exemple si les cellules mémoire recevant les bits d'un même mot binaire sont agencées de façon entrelacée ou aléatoire dans le plan mémoire).

Il est à noter que dans les circuits de permutation SCT, DSCT précédemment décrits, les chemins d'entrelacement des signaux ne comprennent qu'un seul transistor T1-T4, TR (figures 4A, 4B, 5), de sorte que les signaux analogiques CBL0-CBLm fournis par les cellules mémoire ou les signaux numériques b0-bm fournis par les amplificateurs de lecture ne sont pas altérés en traversant ces circuits. Certaines précautions à la portée de l'homme de l'art peuvent par ailleurs être prévues, par exemple le fait de rendre passant les transistors des circuits SCT, DSCT en leur appliquant une tension de grille au moins égale à la somme de la tension maximale des signaux qui les traversent et de la tension de seuil de ces transistors.

A la lumière des exemples décrits ci-dessus, il apparaîtra clairement à l'homme de l'art que le procédé et le dispositif selon l'invention sont susceptibles de diverses variantes de mise en oeuvre. Ainsi, la permutation des signaux de sortie effectuée en aval des circuits de traitement, notamment la permutation des bits b0-bm fournis par les amplificateurs de lecture, peut être réalisée par un dispositif externe qui reçoit alors les signaux de sortie dans le désordre, par exemple un microprocesseur externe qui utilise la mémoire. Le signal SEL qui contrôle la première permutation est alors fourni au dispositif externe, par exemple au moyen d'une sortie spécifique de la mémoire, afin de permettre au dispositif externe de réorganiser les signaux de sortie dans l'ordre souhaité. Alternativement, le signal de commande SEL peut être fourni par le dispositif externe en prévoyant une entrée spécifique reliée à l'entrée de commande du circuit de permutation SCT.

Par ailleurs, le nombre de signaux d'entrée et le nombre de circuits de traitement ne sont pas nécessairement identiques. Ainsi, le nombre de circuits de traitement peut être supérieur à celui des signaux d'entrée afin de réaliser par exemple une architecture redondante dans laquelle chaque signal d'entrée peut être traité simultanément par plusieurs circuits de traitement. Il peut également ne pas être nécessaire de traiter tous les signaux à chaque cycle ou étape de traitement, comme cela est le cas dans la mémoire précédemment décrite, où seules les cellules mémoire correspondant à un mot sont lues au cours d'un cycle de lecture. Dans ce cas, le nombre de signaux susceptibles d'être traités peut être supérieur au nombre de circuits de traitement.

Le procédé et le dispositif selon l'invention sont également susceptibles de diverses applications, et s'appliquent de façon générale à tout dispositif comportant des circuits de traitement parallèles tels le convertisseur analogique/numérique ou le dispositif de surveillance mentionnés plus haut.

## Revendications

1. Procédé de lecture de cellules mémoire (MC) dans une mémoire, dans lequel un cycle de lecture comprend des étapes de sélection de cellules mémoire dans la mémoire, et d'application de signaux électriques fonction de l'état des cellules mémoire sélectionnées à des circuits de lecture (SA0-SAm) de cellules mémoire, agencés pour lire en parallèle les cellules mémoire sélectionnées, et fournir chacun un signal de sortie binaire (b0-bm) représentatif de l'état de la cellule mémoire à laquelle il est relié, chaque signal électrique ayant un rang déterminé (0-m),
**caractérisé en ce qu'**un cycle de lecture comprend une étape de modification d'une règle d'assignation des signaux électriques (CBL0-CBLm) aux circuits de lecture (SA0-SAm), de sorte qu'un circuit de lecture traite des signaux électriques de rangs différents au cours de cycles de lecture différents.

2. Procédé selon la revendication 1, dans lequel la règle d'assignation est modifiée de façon aléatoire ou pseudo-aléatoire tous les T cycles de lecture afin de ne pas être prédictible, T étant un entier constant ou variable, supérieur ou égal à 1.

3. Procédé selon la revendication 1 ou 2, dans lequel le nombre de circuits de lecture (SA0-SAm) est égal au nombre de signaux électriques (CBL0-CBLm) à traiter, chaque circuit de lecture étant affecté à un signal électrique et un seul à chaque cycle de lecture, sans redondance de circuits de lecture.

4. Procédé selon l'une des revendications 1 à 3, dans lequel l'étape de modification de la règle d'assignation comprend une étape d'application d'une première permutation à au moins une partie des signaux électriques (CBL0-CBLm) à traiter.

5. Procédé selon la revendication 4, dans lequel :
- les circuits de lecture (SA0-SAm) fournissent des signaux de sortie (b0-bm) ayant chacun un rang déterminé, et
- l'étape de modification de la règle d'assignation comprend une étape d'application aux signaux de sortie d'une seconde permutation pour ordonner les signaux de sortie (b0-bm) dans un ordre invariant prédéterminé.

6. Procédé selon la revendication 4 ou 5, dans lequel une permutation est effectuée au moyen de multiplexeurs (T1-T4).

7. Procédé selon l'une des revendications 1 à 6, comprenant des étapes consistant à :
- définir des groupes de signaux électriques (CBL0-CBLm) et des groupes de circuits de lecture (SA0-SAm), chaque groupe de circuits de lecture étant affecté à un groupe de signaux,
- définir au sein de chaque groupe de signaux électriques une règle d'assignation de chaque signal électrique du groupe à l'un des circuits de lecture du groupe de circuits de lecture affecté au groupe de signaux, et
- modifier la règle d'assignation des signaux électriques au sein d'au moins un groupe de signaux entre deux cycles de lecture différents.

8. Procédé selon la revendication 7, dans lequel le nombre de circuits de lecture (SA0-SAm) dans chaque groupe de circuits de lecture est égal au nombre de signaux électriques (IS0-ISm) dans chaque groupe de signaux électriques, chaque groupe de circuits de lecture étant affecté à un groupe de signaux électriques sans redondance de circuits de lecture.

9. Procédé selon l'une des revendications 1 à 8, comprenant des étapes consistant à :
- prévoir des chemins électriques permutables entre les cellules mémoire et les circuits de lecture (SA0-SAm),
- appliquer une première permutation à au moins une partie des chemins électriques, pour modifier l'ordre dans lequel les cellules mémoire sélectionnées sont reliées aux circuits de lecture, et
- appliquer une seconde permutation aux signaux de sortie (b0-bm) fournis par les circuits de lecture, pour que les signaux de sortie soient fournis dans un ordre invariant prédéterminé.

10. Mémoire (20) comprenant :
- des cellules mémoire (MC),
- des moyens de sélection (Cdec, TS) de cellules mémoire,
- des circuits de lecture (SA0-SAm) de cellules mémoire, agencés pour recevoir en parallèle des signaux électriques (CBL0-CBLm) fonction de l'état des cellules mémoire (MC) sélectionnées et fournir chacun un signal de sortie binaire (b0-bm) représentatif de l'état de la cellule mémoire à laquelle il est relié,
**caractérisée en ce qu'**elle comprend :
- un premier circuit de permutation (SCT) pour appliquer une permutation à au moins une partie des signaux électriques (CBL0-CBLm) à l'entrée des circuits de lecture (SA0-SAm) et modifier la règle d'assignation des signaux électriques aux circuits de lecture, et
- des moyens de contrôle (ISGEN) du premier circuit de permutation, pour modifier la règle d'assignation entre des cycles de lecture successifs.

11. Mémoire selon la revendication 10, comprenant un nombre de circuits de lecture (SA0-SAm) égal au nombre de signaux électriques (CBL0-CBLm) à traiter, chaque circuit de lecture étant affecté à un signal électrique et un seul à chaque cycle de lecture, sans redondance de circuits de lecture.

12. Mémoire selon la revendication 10 ou 11, dans laquelle les moyens de contrôle (ISGEN) fournissent au circuit de permutation (SCT) un signal de consigne de permutation (SEL).

13. Mémoire selon la revendication 12, dans laquelle les moyens de contrôle (ISGEN) modifient le signal de consigne (SEL) de façon aléatoire ou pseudo-aléatoire tous les T cycles de lecture, T étant un entier constant ou variable, supérieur ou égal à 1.

14. Mémoire selon l'une des revendications 10 à 13, dans laquelle les circuits de lecture (SA0-SAm) fournissent des signaux de sortie (b0-bm) de rang déterminé, et comprenant un second circuit de permutation (DSCT) pour appliquer aux signaux de sortie une permutation telle que les signaux de sortie soient fournis dans un ordre invariant prédéterminé.

15. Mémoire selon l'une des revendications 10 à 14, dans laquelle le premier et/ou second circuit de permutation (SCT, DSCT) comprend des multiplexeurs (T1-T4).

16. Mémoire selon l'une des revendications 10 à 15, dans laquelle :
- le premier circuit de permutation (SCT) comprend des blocs de permutation (SCT0 :1 - SCTm-1 :m) juxtaposés, chaque bloc de permutation étant agencé pour assigner les signaux électriques d'un groupe de signaux électriques à un groupe de circuits de lecture (SA0-SAm) affecté au groupe de signaux électriques, et
- les moyens de contrôle (ISGEN) sont agencés pour modifier la règle d'assignation appliquée par au moins un bloc entre deux cycles de lecture différents.

17. Mémoire selon la revendication 16, dans laquelle le nombre de circuits de lecture (SA0-SAm) dans chaque groupe de circuits de lecture est égal au nombre de signaux électriques (b0-bm) dans chaque groupe de signaux électriques, les groupes de circuits de lecture étant affectés chacun à un groupe de signaux électriques sans redondance de circuits de lecture.

18. Mémoire selon l'une des revendications 10 à 17, comprenant :
- deys chemins électriques reliant les cellules mémoire sélectionnées aux circuits de lecture (SA0-SAm),
- un premier circuit de permutation (SCT) pour permuter les chemins reliant les cellules mémoire et les circuits de lecture, et
- un second circuit de permutation (DSCT) pour appliquer une permutation aux signaux de sortie (b0-bm) fournis par les circuits de lecture, pour que les signaux de sortie soient fournis dans un ordre invariant prédéterminé.

## Claims

1. Method for reading memory cells (MC) in a memory, wherein a read cycle comprises selecting memory cells in the memory, and applying electrical signals depending on the state of the selected memory cells to read circuits (SA0-SAm) for reading memory cells, arranged to read in parallel the selected memory cells, and supply each a binary output signal (b0-bm) representative of the state of the memory cell to which it is linked, each electrical signal having a determined rank (0-m),
**characterised in that** a read cycle comprises modifying an allocation rule for allocating electrical signals (CBL0-CBLm) to the read circuits (SA0-SAm), so that a read circuit processes electrical signals of different ranks during different read cycles.

2. Method according to claim 1, wherein the allocation rule is randomly or pseudo randomly modified every T read cycles so as not to be predictable, where T is a constant or variable integer, superior or equal to 1.

3. Method according to claim 1 or 2, wherein the number of read circuits (SA0-SAm) is equal to the number of electrical signals (CBL0-CBLm) to be processed, each read circuit being allocated to one electrical signal only at each read cycle, without read circuit redundancy.

4. Method according to one of claims 1 to 3, wherein modifying the allocation rule comprises applying a first permutation to at least one part of the electrical signals (CBL0-CBLm) to be processed.

5. Method according to claim 4, wherein:
- the read circuits (SA0-SAm) supply output signals (b0-bm), each having a determined rank, and
- modifying the allocation rule comprises applying to the output signals a second permutation to order the output signals (b0-bm) in a predetermined invariant order.

6. Method according to claim 4 or 5, wherein a permutation is performed by means of multiplexers (T1-T4) .

7. Method according to one of claims 1 to 6, comprising:
- defining groups of electrical signals (CBL0-CBLm) and groups of read circuits (SA0-SAm), each group of read circuits being allocated to a group of signals,
- defining within each group of electrical signals an allocation rule for allocating each electrical signal of the group to one of the read circuits of the group of read circuits allocated to the group of signals, and
- modifying the allocation rule of the electrical signals within at least one group of signals between two different read cycles.

8. Method according to claim 7, wherein the number of read circuits (SA0-SAm) in each group of read circuits is equal to the number of electrical signals (IS0-ISm) in each group of electrical signals, each group of read circuits being allocated to a group of electrical signals without read circuit redundancy.

9. Method according to one of claims 1 to 8, comprising:
- providing electrical paths permutable between the memory cells and the read circuits (SA0-SAm),
- applying a first permutation to at least one part of the electrical paths, to modify the order in which the selected memory cells are linked to the read circuits, and
- applying a second permutation to the output signals (b0-bm) supplied by the read circuits, so that the output signals are supplied in a predetermined invariant order.

10. Memory (20) comprising:
- memory cells (MC),
- means for selecting (Cdec, TS) memory cells,
- read circuits (SA0-SAm) for reading memory cells, arranged to receive in parallel electrical signals (CBL0-CBLm) depending on the state of the selected memory cells (MC) and to supply each a binary output signal (b0-bm) representative of the state of the memory cell to which it is linked,
**characterised in that** it comprises:
- a first permutation circuit (SCT) for applying a permutation to at least one part of the electrical signals (CBL0-CBLm) to the input of the read circuits (SA0-SAm) and for modifying the rule for allocating the electrical signals to the read circuits, and
- control means (ISGEN) for controlling the first permutation circuit, for modifying the allocation rule between successive read cycles.

11. Memory according to claim 10, comprising a number of read circuits (SA0-SAm) equal to the number of electrical signals (CBL0-CBLm) to be processed, each read circuit being allocated to one electrical signal only at each read cycle, without read circuit redundancy.

12. Memory according to claim 10 or 11, wherein the control means (ISGEN) provide the permutation circuit (SCT) with a permutation set signal (SEL).

13. Memory according to claim 12, wherein the control means (ISGEN) modify the set signal (SEL) randomly or pseudo randomly every T read cycles, where T is a constant or variable integer, superior or equal to 1.

14. Memory according to one of claims 10 to 13, wherein the read circuits (SA0-SAm) supply output signals (b0-bm) of determined rank, and comprising a second permutation circuit (DSCT) for applying to the output signals a permutation such that the output signals are supplied in a predetermined invariant order.

15. Memory according to one of claims 10 to 14, wherein the first and/or the second permutation circuit (SCT, DSCT) comprises multiplexers (T1-T4).

16. Memory according to one of claims 10 to 15, wherein:
- the first permutation circuit (SCT) comprises juxtaposed permutation blocks (SCT0 :1 - SCTm-1 :m), each permutation block being arranged to allocate the electrical signals of a group of electrical signals to a group of read circuits (SA0-SAm) allocated to the group of electrical signals, and
- the control means (ISGEN) are arranged to modify the allocation rule applied by at least one block between two different read cycles.

17. Memory according to claim 16, wherein the number of read circuits (SA0-SAm) in each group of read circuits is equal to the number of electrical signals (b0-bm) in each group of electrical signals, each group of read circuits being allocated to a group of electrical signals without read circuit redundancy.

18. Memory according to one of claims 10 to 17, comprising:
- electrical paths linking the selected memory cells to the read circuits (SA0-SAm),
- a first permutation circuit (SCT) for permuting the paths linking the memory cells and the read circuits, and
- a second permutation circuit (DSCT) for applying a permutation to the output signals (b0-bm) supplied by the read circuits, so that the output signals are supplied in a predetermined invariant order.

## Patentansprüche

1. Verfahren zum Auslesen von Speicherzellen (MC) in einem Speicher, bei dem ein Auslesezyklus Schritte zur Selektion von Speicherzellen in dem Speicher umfasst, sowie zur Anwendung von elektrischen, vom Zustand der selektierten Speicherzellen abhängigen Signalen auf Speicherzellenauslesekreise (SA0-SAm), die so angeordnet sind, dass die selektierten Speicherzellen parallel ausgelesen werden und dass jeder Auslesekreis ein binäres, für den Zustand der mit ihm verbundenen Speicherzelle repräsentatives Ausgangssignal (b0-bm) abgibt, wobei jedes elektrische Signal einen bestimmten Rang hat (0-m),
**dadurch gekennzeichnet, dass** ein Lesezyklus einen Schritt zur Änderung einer Regel für die Zuordnung der elektrischen Signale (CBL0-CBLm) zu den Auslesekreisen (SA0-SAm) umfasst, so dass ein Auslesekreis im Laufe verschiedener Auslesezyklen elektrische Signale unterschiedlichen Ranges verarbeitet.

2. Verfahren nach Anspruch 1, bei dem die Zuordnungsregel zufällig oder pseudozufällig alle T Auslesezyklen geändert wird, um nicht voraussagbar zu sein, wobei T eine konstante oder variable ganze Zahl ist, die höher oder gleich 1 ist.

3. Verfahren nach Anspruch 1 oder 2, bei dem die Anzahl der Auslesekreise (SA0-SAm) gleich der Anzahl der zu verarbeitenden elektrischen Signale (CBL0-CBLm) ist, wobei jeder Auslesekreis einem einzigen elektrischen Signal pro Auslesezyklus zugeordnet ist, ohne Redundanz der Auslesekreise.

4. Verfahren nach einem der Ansprüche 1 bis 3, bei dem der Schritt zur Änderung der Zuordnungsregel einen Schritt zur Anwendung eines erstens Austauschs auf wenigstens einen Teil der zu verarbeitenden elektrischen Signale (CBL0-CBLm) umfasst.

5. Verfahren nach Anspruch 4, bei dem:
- die Auslesekreise (SA0-SAm) Ausgangssignale (b0-bm) abgeben, wobei jedes Ausgangssignal einen bestimmten Rang hat, und
- der Schritt zur Änderung der Zuordnungsregel einen Schritt zur Anwendung eines zweiten Austauschs auf die Ausgangssignale umfasst, um die Ausgangssignale (b0-bm) gemäß einer vorbestimmten unveränderlichen Reihenfolge zu ordnen.

6. Verfahren nach Anspruch 4 oder 5, bei dem ein Austausch mit Hilfe von Multiplexern (T1-T4) vorgenommen wird.

7. Verfahren nach einem der Ansprüche 1 bis 6, umfassend Schritte, die darin bestehen:
- Gruppen elektrischer Signale (CBL0-CBLm) und Auslesekreisgruppen (SA0-SAm) zu bestimmen, wobei jede Auslesekreisgruppe einer Signalgruppe zugeordnet ist,
- innerhalb jeder Gruppe elektrischer Signale eine Regel für die Zuordnung jedes elektrischen Signals der Gruppe zu einem der Auslesekreise der, der Signalgruppe zugeordneten Auslesekreisgruppe zu bestimmen und
- die Regel für die Zuordnung der elektrischen Signale innerhalb wenigstens einer Signalgruppe zwischen zwei verschiedenen Auslesezyklen zu ändern.

8. Verfahren nach Anspruch 7, bei dem die Anzahl der Auslesekreise (SA0-SAm) in jeder Auslesekreisgruppe gleich der Anzahl elektrischer Signale (IS0-ISm) in jeder Gruppe elektrischer Signale ist, wobei jede Auslesekreisgruppe einer Gruppe elektrischer Signale zugeordnet ist, ohne Redundanz der Auslesekreise.

9. Verfahren nach einem der Ansprüche 1 bis 8, umfassend Schritte, die darin bestehen:
- austauschbare elektrische Wege zwischen den Speicherzellen und den Auslesekreisen (SA0-SAm) vorzusehen,
- einen ersten Austausch auf wenigstens einen Teil der elektrischen Wege anzuwenden, um die Reihenfolge zu ändern, in der die selektierten Speicherzellen mit den Auslesekreisen verbunden sind, und
- einen zweiten Austausch auf die von den Auslesekreisen abgegebenen Ausgangssignale (b0-bm) anzuwenden, damit die Ausgangssignale in einer vorbestimmten unveränderlichen Reihenfolge abgegeben werden.

10. Speicher (20) umfassend:
- Speicherzellen (MC),
- Speicherzellenselektionmittel (Cdec, TS),
- Speicherzellenauslesekreise (SA0-SAm), die so angeordnet sind, dass vom Zustand der selektierten Speicherzellen (MC) abhängige elektrische Signale (CBL0-CBLm) parallel empfangen werden und dass jeder Auslesekreis ein binäres, für den Zustand der mit ihm verbundenen Speicherzelle repräsentatives Ausgangssignal (b0-bm) abgibt,
**dadurch gekennzeichnet, dass** er folgendes umfasst:
- einen ersten Austauschkreis (SCT) zur Anwendung eines Austauschs auf wenigstens einen Teil der elektrischen Signale (CBL0-CBLm) am Eingang der Auslesekreise (SA0-SAm) und zur Änderung der Regel für die Zuordnung der elektrischen Signale zu den Auslesekreisen und
- Kontrollmittel (ISGEN) des ersten Austauschkreises, um die Zuordnungsregel zwischen aufeinanderfolgenden Auslesezyklen zu ändern.

11. Speicher nach Anspruch 10, umfassend eine Anzahl an Auslesekreisen (SA0-SAm), die gleich der Anzahl der zu verarbeitenden elektrischen Signale (CBL0-CBLm) ist, wobei jeder Auslesekreis einem einzigen elektrischen Signal pro Auslesezyklus zugeordnet ist, ohne Redundanz der Auslesekreise.

12. Speicher nach Anspruch 10 oder 11, in dem die Kontrollmittel (ISGEN) dem Austauschkreis (SCT) ein Austauschanweisungssignal (SEL) erteilen.

13. Speicher nach Anspruch 12, in dem die Kontrollmittel (ISGEN) das Anweisungssignal (SEL) zufällig oder pseudozufällig alle T Auslesezyklen ändern, wobei T eine konstante oder variable ganze Zahl ist, die höher oder gleich 1 ist.

14. Speicher nach einem der Ansprüche 10 bis 13, in dem die Auslesekreise (SA0-SAm) Ausgangssignale (b0-bm) eines bestimmten Ranges abgeben und der einen zweiten Austauschkreis (DSCT) umfasst, um auf die Ausgangssignale einen derartigen Austausch anzuwenden, dass die Ausgangssignale in einer vorbestimmten unveränderlichen Reihenfolge abgegeben werden.

15. Speicher nach einem der Ansprüche 10 bis 14, in dem der erste und/oder zweite Austauschkreis (SCT, DSCT) Multiplexer (T1-T4) umfasst.

16. Speicher nach einem der Ansprüche 10 bis 15, in dem:
- der erste Austauschkreis (SCT) nebeneinanderliegende Austauschblöcke (SCT0 :1 - SCTm-1 :m) umfasst, wobei jeder Austauschblock so angeordnet ist, dass die elektrischen Signale einer Gruppe elektrischer Signale einer, der Gruppe elektrischer Signale zugeordneten Auslesekreisgruppe (SA0-SAm) zugeordnet werden und
- die Kontrollmittel (ISGEN) angeordnet sind, um die wenigstens von einem Block zwischen verschiedenen Auslesezyklen angewandte Zuordnungsregel zu ändern.

17. Speicher nach Anspruch 16, in dem die Anzahl der Auslesekreise (SA0-SAm) in jeder Auslesekreisgruppe gleich der Anzahl der elektrischen Signale (b0-bm) in jeder Gruppe elektrischer Signale ist, wobei jede der Auslesekreisgruppen einer Gruppe elektrischer Signale zugeordnet ist, ohne Redundanz der Auslesekreise.

18. Speicher nach einem der Ansprüche 10 bis 17, umfassend:
- die selektierten Speicherzellen mit den Auslesekreisen (SA0-SAm) verbindende elektrische Wege,
- einen ersten Austauschkreis (SCT) zum Austausch der die Speicherzellen und die Auslesekreise verbindenden Wege und
- einen zweiten Austauschkreis (DSCT) zur Anwendung eines Austauschs auf die von den Auslesekreisen abgegebenen Ausgangsignale (b0-bm), damit die Ausgangssignale in einer vorbestimmten unveränderlichen Reihenfolge abgegeben werden.
